# EUROPÄISCHE PATENTSCHRIFT

(11) **EP 1 736 397 B1**
(45) Veröffentlichungstag und Bekanntmachung des Hinweises auf die Patenterteilung: **29.06.2011**
(21) Anmeldenummer: 06008256.7
(22) Anmeldetag: 21.04.2006
(51) Int. Cl.: B62D 25/06

(54) **Hintere Aufbaustruktur eines Kraftfahrzeugs**
Vehicle body rear structure
Structure arrière de carrosserie de véhicule automobile

(30) Priorität: 24.06.2005 US 165238
(43) Veröffentlichungstag der Anmeldung: 27.12.2006
(73) Patentinhaber: Dr. Ing. h.c. F. Porsche AG, 70435 Stuttgart (DE)
(72) Erfinder: Wolkersdorfer, Werner, 75242 Neuhausen (DE); Tattersall, Terence, Rochester Hills Michigan 48306 (US)

(56) Entgegenhaltungen:
- DE-A1- 19 515 979
- US-A- 4 634 173
- US-A- 4 775 181
- US-B1- 6 578 909

## Beschreibung

Bei der Erfindung wird ausgegangen von einer hinteren Aufbaustruktur eines Kraftfahrzeugs, gemäß Oberbegriff des Patentanspruchs 1.

Eine hintere Aufbaustruktur eines Kraftfahrzeugs der eingangs genannten Art ist aus der DE 195 15 979 C2 und US 463 4 173 bekannt. Das Kraftfahrzeug weist einen Karosserieausschnitt für eine Heckklappe auf, die über ein Scharnier an der Aufbaustruktur angeschlagen ist. Die Aufbaustruktur selbst umfasst zumindest einen Dachknoten, in dem ein seitlicher Dachlängsholm, ein quer verlaufender Dachrahmen und eine hintere Säule, hier die D-Säule, zusammenlaufen. Der quer verlaufende Dachrahmen liegt zwischen zwei sich gegenüberliegenden Dachknoten und weist ferner jeweils eine nahe den Dachknoten liegende Scharnieranbindung für die Heckklappe auf. Die Scharnieranbindung ist hier in Form einer Montagefläche für ein Beschlagteil des Heckklappenscharniers ausgebildet. Der Dachlängsholm, der Dachrahmen und die hintere Säule sind jeweils in Blechschalenbauweise ausgeführt und weisen zumindest eine Außenwand und eine Innenwand auf. Die Innenwand ist dem unter der Heckklappe liegenden Gepäckraum bzw. Fahrzeuginnenraum zugewandt. Die Außenwand liegt entsprechend gegenüber und kann beispielsweise bei der hinteren Säule bzw. bei dem Dachlängsholm einen Teil der Fahrzeugaußenhaut bilden. Die Außenwand des quer verlaufenden Dachrahmens wird von einer Dachplatte abgedeckt, die Teil der Fahrzeugaußenhaut ist. Der Dachknoten weist ein inneres Seitenteil mit einem Dachlängsholmfortsatz, einem Dachrahmenfortsatz sowie einen Säulenfortsatz auf und kann beispielsweise T-förmig ausgeführt sein. Die Innenwände des Dachlängsholms und der hinteren Säule werden durch den entsprechenden Dachlängsholmfortsatz bzw. Säulenfortsatz des inneren Seitenteils gebildet. An den Dachrahmenfortsatz schließt sich eine Scharnierverstärkung an, die mit dem Dachrahmenfortsatz lediglich in einem Verbindungsabschnitt überlappend verbunden ist.

Es ist Aufgabe der Erfindung, eine hintere Aufbaustruktur der eingangs genannten Art anzugeben, die einfach aufgebaut ist.

Gelöst wird diese Aufgabe mit einer hinteren Aufbaustruktur eines Kraftfahrzeugs, die die in Anspruch 1 genannten Merkmale aufweist. Ausgestaltungen der Erfindung sind in den Unteransprüchen angegeben.

Die mit der Erfindung hauptsächlich erzielten Vorteile sind darin zu sehen, dass bei einem einfachen Aufbau der Struktur eine ausreichende Steifigkeit, insbesondere für die Befestigung des Heckklappenscharniers, im Bereich des Dachknotens erreicht wird. Insbesondere kann die Scharnierverstärkung einfach durch Aufsetzen an der Innenfläche des Dachrahmenfortsatzes befestigt werden. Insgesamt zeichnet sich die hintere Aufbaustruktur im Bereich des Dachknotens durch eine vergleichsweise geringe Anzahl von Blechteilen aus, die dennoch dem Dachknoten eine ausreichende Streifigkeit verleihen.

Mit den in den Unteransprüchen 2 bis 15 angegebenen Ausführungsbeispielen bzw. Weiterbildungen wird die Steifigkeit der hinteren Aufbaustruktur weiter optimiert bzw. deren Zusammensetzen weiter vereinfacht. Beispielsweise kann ein Schließteil des quer verlaufenden Dachrahmens befestigt werden, nachdem die Scharnierverstärkung an dem inneren Seitenteil angebracht wurde.

Die Erfindung wird nachfolgend anhand eines Ausführungsbeispiels mit Bezug auf die Zeichnung näher erläutert. Es zeigen:
- Fig. 1: in einer Perspektive ausschnittweise ein Kraftfahrzeug,
- Fig. 2: in Explosionsdarstellung die hintere Aufbaustruktur im Bereich eines Dachknotens und
- Fig.3 und 4: jeweils einen Schnitt durch die hintere Aufbaustruktur entlang den Linien III-III bzw. IV-IV in Fig. 1.

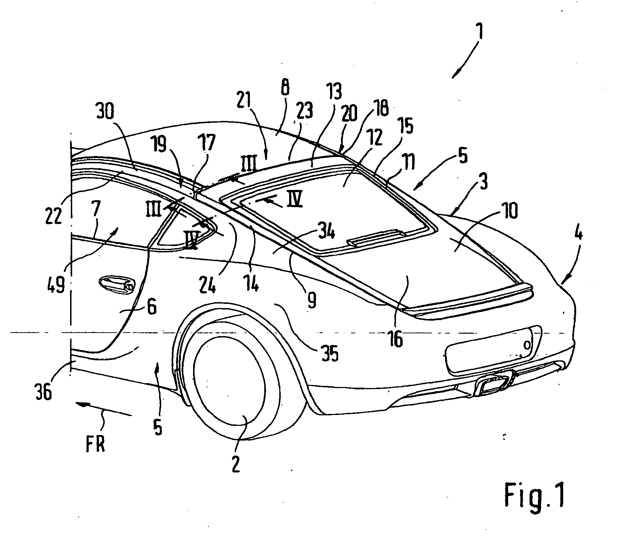

In Fig. 1 ist in seitlicher Heckansicht ein Kraftfahrzeug 1 dargestellt, welches einen von Rädern 2 getragenen Fahrzeugaufbau mit einer Karosserie 3 umfasst. Die Karosserie 3 umfasst eine Heckpartie 4, davor - in üblicher Vorwärtsfahrtrichtung FR gesehen - angeordnete linke und rechte Seitenwände 5, in die Türen 6 eingesetzt sind, und oberhalb einer Gürtellinie 7 ein Dach 8. Ein Karosserieausschnitt 9 wird begrenzt von dem Dach 8, den beiden Seitenwänden 5 sowie der Heckpartie 4. In den Karosserieausschnitt 9 ist eine Heckklappe 10 eingesetzt, die benachbart zum Dach 8 einen etwa rechteckigen Scheibenausschnitt 11 aufweist, in den eine Heckscheibe 12 eingesetzt ist. Die Heckscheibe 12 wird demnach umrahmt von einem oberen Rahmenteil 13, zwei seitlichen Rahmenteilen 14 und 15 und einem hinteren festen Heckklappenabschnitt 16. Jeweils obere Heckbereiche 17 und 18 des Karosserieausschnitts 9 für die Heckklappe 10 liegen benachbart zu jeweils einem Dachknoten 19 bzw. 20 einer hinteren Aufbaustruktur 21 der Karosserie 3.

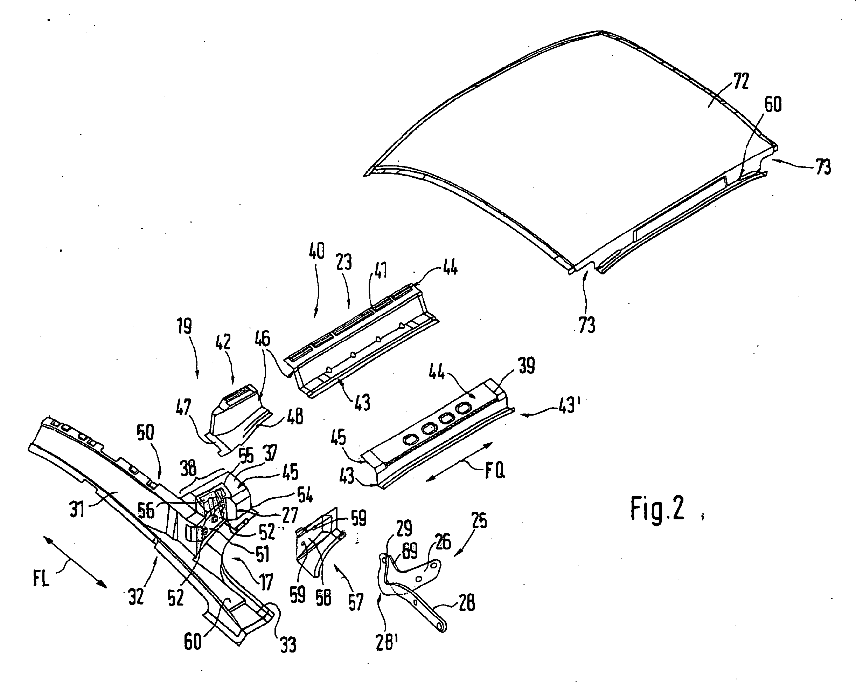

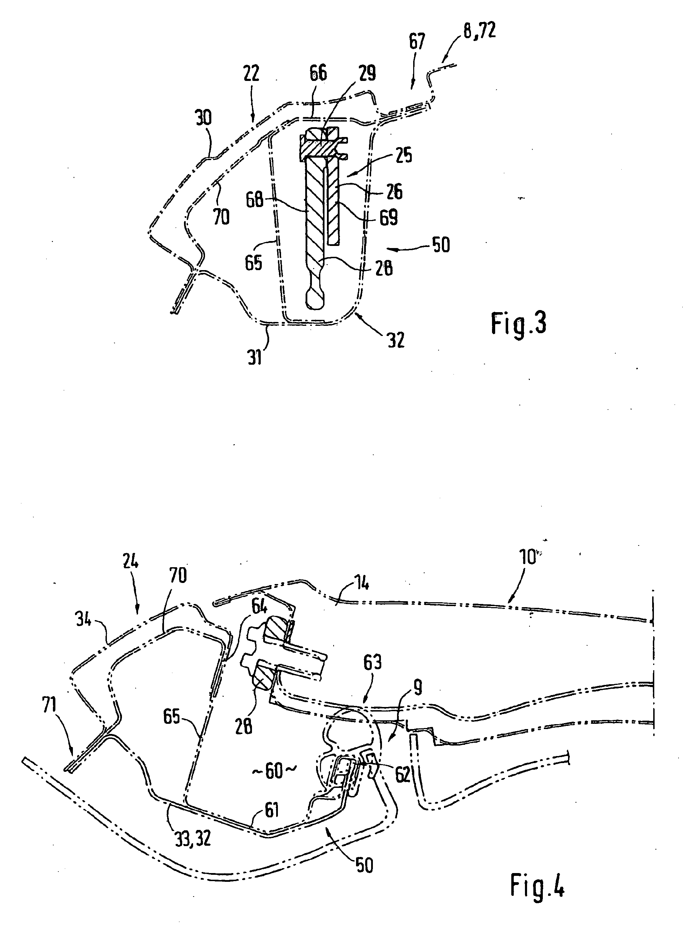

Nachfolgend wird der linke Dachknoten 19 näher erläutert; der rechte Dachknoten 20 ist entsprechend spiegelbildlich ausgeführt. In dem Dachknoten 19 laufen zusammen ein seitlicher Dachlängsholm 22, ein quer verlaufender hinterer Dachrahmen 23 und eine hintere Säule 24, hier die C-Säule. An dem hinteren Dachrahmen 23 ist die Heckklappe 10 mittels einer in Fig. 2 dargestellten Scharniereinrichtung 25 angeschlagen. Die Scharniereinrichtung 25 umfasst ein aufbauseitiges Beschlagteil 26, welches an einer Scharnieranbindung 27 am hinteren Dachrahmen 23 befestigt ist. Ein klappenseitiges Beschlagteil 28 der Scharniereinrichtung 25 ist an dem seitlichen Rahmenteil 14 der Heckklappe 10 befestigt, wie dies aus Fig. 4 hervorgeht. Die beiden Beschlagteile 26 und 28 sind in einer Scharnierachse 29 schwenkbeweglich miteinander verbunden. Die Scharniereinrichtung 25 ist überdies in Fig. 3 im Schnitt dargestellt.

Der Dachknoten 19 wird weiter anhand der Fig. 2 bis 4 näher beschrieben: Der Dachlängsholm 22, der quer verlaufende Dachrahmen 23 und die hintere Säule 24 sind jeweils in Blechschalenbauweise ausgeführt und weisen jeweils zumindest eine Außenwand und eine Innenwand auf. Die Außenwand des Dachlängsholms 22 wird von einem Außenblech 30 gebildet, welches Bestandteil der Seitenwand 5 sein kann, und ein Dachlängsholmfortsatz 31 eines inneren Seitenteils 32 bildet die Innenwand des Dachlängsholms 22. Das innere Seitenteil 32 weist ferner einen Säulenfortsatz 33 als Innenwand der hinteren Säule 24 auf; die Außenwand der Säule 24 wird von einem Außenblech 34 gebildet, welches Bestandteil der Seitenwand 5 sein kann. Die beiden Außenbleche 30 und 34 sind vorzugsweise einstückig ausgeführt und können überdies einstückig mit übrigen Teilen 35 und 36 der Seitenwand 5 realisiert sein. Diese Teile 35 und 36 können beispielsweise ein hinterer Kotflügel und ein Außenblech des Schwellers sein.

Die beiden Fortsätze 31 und 33 bilden - wie eben erwähnt - Innenwände des Dachlängsholms 22 bzw. der hinteren Säule 24. Ein weiterer Fortsatz des inneren Seitenteils 22 ist als Dachrahmenfortsatz 37 ausgeführt und bildet einen Abschnitt 38 der Außenwand des hinteren, quer verlaufenden Dachrahmens 23. An den Dachrahmenfortsatz 37 schließt sich zur Fortführung der Außenwand ein Dachrahmenaußenteil 39 an, welches bis zu einem in Fig. 2 nicht dargestellten inneren Seitenteil des rechten Dachknotens 20 heranreicht und mit dessen Dachrahmenfortsatz verbunden ist. Für die Innenwand des hinteren Dachrahmens 23 ist ein Dachrahmeninnenteil 40 vorgesehen, welches aus einem Mittelteil 41 und einem seitlichen Schließteil 42 zusammengesetzt sein kann. Mittelteil 41 und Dachrahmenaußenteil 39 sind miteinander verbunden. Ein seitliches Schließteil 42 ist dem Dachrahmenfortsatz 37 des inneren Seitenteils 32 zugeordnet und verlängert das Mittelteil 41. Ein hier nicht dargestelltes weiteres seitliches Schließteil ist für den rechten Dachknoten 20 vorgesehen.

Das Dachrahmenaußenteil 39 und das Mittelteil 41 sind über streifenförmige, in Fahrzeugquerrichtung FQ verlaufende Fügeflächenpaare 43 und 44 fest miteinander verbunden. Über ein weiteres Fügeflächenpaar 45, welches ebenfalls streifenförmig ausgeführt ist, jedoch in Fahrzeuglängsrichtung FL verläuft, ist das Dachrahmenaußenteil 39 mit dem Dachrahmenfortsatz 37 verbunden. Ein weiteres, streifenförmiges und in Fahrzeuglängsrichtung FL verlaufendes Fügeflächenpaar 46 verbindet das seitliche Schließteil 42 mit dem Mittelteil 41. Das Schließteil 42 ist überdies über streifenförmige weitere Fügeflächen 47 und 48 mit einer dem Fahrzeuginnenraum 49 (siehe Fig. 1) zugewandten Innenfläche 50 des inneren Seitenteils 32 verbunden. Dabei ist die Fügefläche 47 streifenförmig etwa in Fahrzeuglängsrichtung FL und die Fügefläche 48 streifenförmig etwa in Fahrzeugquerrichtung FQ verlaufend ausgeführt. Somit ist der insgesamt als Hohlprofil ausgeführte Dachrahmen 23 mit seinem Dachrahmeninnenteil 40 bis an den Dachlängsholmfortsatz 31 herangeführt, insbesondere über das Schließteil 42 daran befestigt.

Für die Scharnieranbindung 27 ist eine Scharnierverstärkung 51 vorgesehen, die der Innenfläche 50 des Seitenteils 32 zugeordnet, insbesondere daran befestigt ist und von dem Schließteil 42 verdeckt wird. Die Scharnierverstärkung 51 ist im Bereich des Dachrahmenfortsatzes 37 an der Innenfläche 50 befestigt und verstärkt somit den Dachrahmenfortsatz 37 für die Befestigung der Scharniereinrichtung 25. Die Scharnierverstärkung 51 ist etwa plattenförmig ausgeführt und weist zumindest ein Befestigungselement 52 für die Scharniereinrichtung 25 auf. Die Scharnierverstärkung 51 weist eine in Fahrzeugquerrichtung FQ gemessene Länge auf, die vorzugsweise kleiner als die in der Fahrzeugquerrichtung FQ gemessene Länge des Dachrahmenfortsatzes 37 ist. Ferner besitzt die plattenförmige Scharnierverstärkung 51 noch einen ersten laschenartigen Fortsatz 53, der an der Innenseite 50 des Seitenteils 32 an dessen Dachlängsholmfortsatz 31 befestigt ist. Im Querschnitt gesehen weist der Dachrahmenfortsatz 37 zumindest zwei unter einem Winkel zueinander verlaufende Schenkel 54 und 55 auf, wobei die plattenförmige Scharnierverstärkung 51 dem Schenkel 54 zugeordnet ist. Ein zweiter laschenartiger Fortsatz 56 der Scharnierverstärkung 51 ist an der Innenseite 50 des Schenkels 55 des Dachrahmenfortsatzes 37 befestigt. Vervollständigt wird die Scharnieranbindung 27 von einem auf den Schenkel 54 des Dachrahmenfortsatzes 37 aufgesetzten Eckteil 57, welches eine zurückversetzte Anschlagfläche 58 für das Beschlagteil 26 der Scharniereinrichtung 25 aufweist. In der Anschlagfläche 58 sind noch entsprechende Durchbrüche 59 vorgesehen, die mit den Befestigungselementen 52 der Scharnierverstärkung 51 korrespondieren. Beispielsweise über hier nicht gezeigte Schrauben kann die Scharniereinrichtung 25 an der Scharnieranbindung 27 sicher gehalten werden.

Wie Fig. 4 zeigt, ist der Karosserieausschnitt 9 für die Heckklappe 10 von einem so genannten Dichtkanal 60 zumindest teilweise umlaufend umgeben, in dem eingetretenes Wasser zu einer geeigneten Ablaufstelle geführt werden kann. Der den Karosserieausschnitt 9 begrenzende Dichtkanal 60 ist als nach oben offenes Profil, insbesondere U-Profil, ausgestaltet und weist ein als Blechteil ausgeführtes Dichtkanalteil 61 auf, welches einen abgestellten Flansch 62 besitzt, auf den eine Dichtung 63 aufgesetzt ist. Dieses Dichtkanalteil 61 liegt auf dem Säulenfortsatz 33 des inneren Seitenteils 32 auf und kann mit seinem Flansch 62 mit dem Seitenteil 32 fest verbunden sein. Mit seinem dem Flansch 62 gegenüberliegenden Ende 64 ist das Dichtkanalteil 61 mit der Außenwand der Säule 24 verbunden, wobei sich das Dichtkanalteil 61 zumindest mit einem das Ende 64 aufweisenden aufrechten Abschnitt 65 über den Dachknoten 19 hinaus bis in den Dachlängsholm 22 hinein erstreckt, was aus Fig. 3 hervorgeht. Dieser Abschnitt 65 wird vorzugsweise mit dem inneren Seitenteil 32 im Bereich des Dachlängsholmfortsatzes 31 verbunden. Wie aus Fig. 3 weiter hervorgeht, schließt sich an den aufrechten Abschnitt 65 noch ein Dachabschnitt 66 an, der mit seinem Ende in einem Verbindungsabschnitt 67 mit dem inneren Seitenteil 32, der die Außenhaut bildende Seitenwand 5 und gegebenenfalls mit dem Dach 8 verbunden ist. Zwischen dem inneren Seitenteil 32 bzw. dessen Dachlängsholmfortsatz 31 und dem aufrechten Abschnitt 65 ist eine Tasche 68 ausgebildet, in die die Scharniereinrichtung 25 teilweise eintauchen kann. Insbesondere gilt dies für den bogenförmigen Abschnitt 28' des Beschlagteils 28 bzw. der die Scharnierachse 29 tragenden Abstellung 69 des Beschlagteils 26.

Wie Fig. 3 und 4 zeigen, liegt innerhalb des Dachlängsholms 22 und der hinteren Säule 24 noch ein als Blechteil ausgeführtes Verstärkungsteil 70, welches im Querschnitt etwa an den Querschnitt der Außenwand des Dachlängsholms 22 bzw. der Säule 24 angepasst ist. Das Verstärkungsteil 70 liegt somit innerhalb der Außenwand und der Innenwand, die sowohl für die Säule 24 als auch für den Dachlängsholm 22 durch das innere Seitenteil 32 gebildet ist. Das Verstärkungsteil 70 ist mit einem Ende mit dem aufrechten Abschnitt 65 des Dichtkanalteils 61 verbunden; mit dem anderen Ende ist das Verstärkungsteil 70 in einem Verbindungsabschnitt 71 zwischen dem inneren Seitenteil 32 und der Außenwand des Dachlängsholms 22 bzw. der Säule 24 dazwischen fest eingebunden. Durch das Verstärkungsteil 70, welches sich also innerhalb der Säule 24 als auch innerhalb des Dachlängsholms 22 erstreckt, dem aufrechten Abschnitt 65 des Dichtkanalteils 61, welcher sich aus dem Bereich der Säule 24 bis in den Dachlängsholm 22 hinein erstreckt, sowie die Außenwand der Säule 24 bzw. Dachlängsholm 22 und dem inneren Seitenteil 32 ergibt sich somit eine hohe Steifigkeit im Bereich des Dachknotens 19. Die Steifigkeit im Dachknoten 19 wird wesentlich bestimmt durch den Dachrahmenfortsatz 37 des inneren Seitenteils 32, der sich schräg durch den Dachknoten 19 hindurch erstreckt, da er von den die jeweiligen Innenwände bildenden Fortsätzen 31 und 33 des Seitenteils 32 entspringt und den Abschnitt 38 der Außenwand des hinteren, quer verlaufenden Dachrahmens 23 bildet.

Fig. 2 zeigt im Eckbereich 17 noch, dass das Eckteil 57 teilweise Bestandteil des Dichtkanals 60 ist. Gleiches gilt für eine Abstellung 43' am Dachrahmenaußenteil 39, welche Abstellung 43' eine Fügefläche des Fügeflächenpaares 43 aufweist. Der zusammengesetzte Dachknoten 19 bzw. 20 wird von einer aufgesetzten Dachplatte 72 abgedeckt, die seitlich in dem Verbindungsbereich 67 mit dem Dachlängsholm 22 und außerdem im Bereich des hinteren Dachrahmens 23 mit dem Dachrahmenaußenteil 39 an dessen die Fügefläche des Fügeflächenpaares 43 tragenden Abstellung 43' verbunden ist. Die Dachplatte 72 weist jeweils Eckausschnitte 73 auf, die die Scharnieranbindung 27 freilassen.

## Patentansprüche

1. Hintere Aufbaustruktur eines Kraftfahrzeugs (1) mit einem Karosserieausschnitt (9) für eine an der Aufbaustruktur angeschlagene Heckklappe (10), welche Aufbaustruktur einen Dachknoten (19, 20) aufweist, in dem ein seitlicher Dachlängsholm (22), ein quer verlaufender Dachrahmen (23) mit einer Scharnieranbindung (27) für die Heckklappe (10) und eine hintere Säule (24) zusammenlaufen, wobei jeweils der Dachlängsholm (22), der Dachrahmen (23) und die Säule (24) in Blechschalenbauweise zumindest eine Außenwand und ein Innenwand aufweisen, welcher Dachknoten (19, 20) ferner ein inneres Seitenteil (32) mit einem Dachlängsholmfortsatz (31), einem Dachrahmenfortsatz (37) sowie einem Säulenfortsatz (33) aufweist, welcher Dachlängsholmfortsatz (31) und Säulenfortsatz (37) die jeweilige Innenwand bilden, an welchem Dachrahmenfortsatz (37) eine Scharnierverstärkung (51) der Scharnieranbindung (27) befestigt ist, **dadurch gekennzeichnet, dass** der Dachrahmenfortsatz (37) des inneren Seitenteils (32) einen Abschnitt (38) der Außenwand des quer verlaufenden Dachrahmens (23) bildet, dass die Scharnierverstärkung (51) an einer Innenfläche (50) des Dachrahmenfortsatzes (37) befestigt ist und dass ein Dachrahmeninnenteil (40) die Innenwand des Dachrahmens (23) bildet.

2. Aufbaustruktur nach Anspruch 1, **dadurch gekennzeichnet, dass** das Dachrahmeninnenteil (40) bis an den Dachlängsholmfortsatz (31) herangeführt und daran befestigt ist.

3. Aufbaustruktur nach Anspruch 1, **dadurch gekennzeichnet, dass** das Dachrahmeninnenteil (40) ein Mittelteil (41) und ein seitliches Schließteil (42) aufweist.

4. Aufbaustruktur nach Anspruch 2, **dadurch gekennzeichnet, dass** das Dachrahmeninnenteil (40) ein Mittelteil (41) und ein seitliches Schließteil (42) aufweist.

5. Aufbaustruktur nach Anspruch 3, **dadurch gekennzeichnet, dass** das Schließteil (42) bis an den Dachlängsholmfortsatz (31) herangeführt und daran befestigt ist.

6. Aufbaustruktur nach Anspruch 1, **dadurch gekennzeichnet, dass** der Dachlängsholm (22) mit einem inneren, zwischen Außenwand und Innenwand liegenden Verstärkungsteil (70) versehen ist.

7. Aufbaustruktur nach Anspruch 1, **dadurch gekennzeichnet, dass** die hintere Säule (24) zumindest teilweise den Karosserieausschnitt (9) mit einem Dichtkanal (60) begrenzt.

8. Aufbaustruktur nach Anspruch 7, **dadurch gekennzeichnet, dass** der Dichtkanal (60) ein offenes Profil als Dichtkanalteil (61) aufweist, das den Karosserieausschnitt (9) mit einem abgestellten Flansch (62) teilweise begrenzt und mit einem Abschnitt (65) in den Dachlängsholm (22) hineinragt.

9. Aufbaustruktur nach Anspruch 8, **dadurch gekennzeichnet, dass** das Dichtkanalteil (61) und der Säulenfortsatz (33) des inneren Seitenteils (32) zumindest abschnittweise übereinander liegen.

10. Aufbaustruktur nach Anspruch 7, **dadurch gekennzeichnet, dass** der in den Dachlängsholm (22) ragende Abschnitt (65) darin mit dem Verstärkungsteil (70) und dem inneren Seitenteil (32) verbunden ist.

11. Aufbaustruktur nach Anspruch 1, **dadurch gekennzeichnet, dass** im Dachlängsholm (22) eine Tasche (68) gebildet ist, in die zumindest teilweise eine Scharniereinrichtung (25) der Heckklappe (10) hineinragt.

12. Aufbaustruktur nach Anspruch 11, **dadurch gekennzeichnet, dass** die Tasche (68) seitlich von dem inneren Seitenteil (32) und dem Abschnitt (65) begrenzt ist.

13. Aufbaustruktur nach Anspruch 1, **dadurch gekennzeichnet, dass** die in Richtung des quer verlaufenden Dachrahmens (23) gemessene Länge des Dachrahmenfortsatzes (37) größer als die Länge der Scharnierverstärkung (51) ist.

14. Aufbaustruktur nach Anspruch 1, **dadurch gekennzeichnet, dass** die Scharnierverstärkung (51) zusätzlich an dem Dachlängsholmfortsatz (31) des inneren Seitenteils (32) befestigt ist.

15. Aufbaustruktur nach Anspruch 1, **dadurch gekennzeichnet, dass** der Dachrahmenfortsatz (37) - im Querschnitt gesehen - zumindest zwei unter einem Winkel zueinander verlaufende Schenkel (54, 55) aufweist und dass die Scharnierverstärkung (51) an beiden Schenkel (54, 55) befestigt ist.

## Claims

1. Rear body structure of a motor vehicle (1), having a bodyshell cutout (9) for a tailgate (10) attached to the body structure, which body structure has a roof node (19, 20) at which a lateral roof longitudinal beam (22), a transversely running roof frame (23) with a hinge connection (27) for the tailgate (10) and a rear pillar (24) converge, in each case the roof longitudinal beam (22), the roof frame (23) and the pillar (24), of sheet-metal shell-type construction, having at least one outer wall and one inner wall, which roof node (19, 20) also has an inner side part (32) with a roof longitudinal beam projection (31), with a roof frame projection (37) and with a pillar projection (33), which roof longitudinal beam projection (31) and pillar projection (33) form the respective inner wall, to which roof frame projection (37) a hinge reinforcement (51) of the hinge attachment (27) is fastened, **characterized in that** the roof frame projection (37) of the inner side part (32) forms a section (38) of the outer wall of the transversely running roof frame (23), **in that** the hinge reinforcement (51) is fastened to an inner surface (50) of the roof frame projection (37), and **in that** a roof frame inner part (40) forms the inner wall of the roof frame (23).

2. Body structure according to Claim 1, **characterized in that** the roof frame inner part (40) extends up to and is fastened to the roof longitudinal beam projection (31).

3. Body structure according to Claim 1, **characterized in that** the roof frame inner part (40) has a central part (41) and a lateral closing part (42).

4. Body structure according to Claim 2, **characterized in that** the roof frame inner part (40) has a central part (41) and a lateral closing part (42).

5. Body structure according to Claim 3, **characterized in that** the closing part (42) extends up to and is fastened to the roof longitudinal beam projection (31).

6. Body structure according to Claim 1, **characterized in that** the roof longitudinal beam (22) is provided with an inner reinforcement part (70) situated between the outer wall and inner wall.

7. Body structure according to Claim 1, **characterized in that** the rear pillar (24) at least partially delimits the bodyshell cutout (9) with a sealing channel (60).

8. Body structure according to Claim 7, **characterized in that** the sealing channel (60) has an open profile as a sealing duct part (61) which partially delimits the bodyshell cutout (9) with a turned-up flange (62) and which projects with a section (65) into the roof longitudinal beam (22).

9. Body structure according to Claim 8, **characterized in that** the sealing duct part (61) and the pillar projection (33) of the inner side part (32) lie one on top of the other at least in sections.

10. Body structure according to Claim 7, **characterized in that** the section (65) which projects into the roof longitudinal beam (22) is connected therein to the reinforcement part (70) and to the inner side part (32).

11. Body structure according to Claim 1, **characterized in that**, a pocket (68) is formed in the roof longitudinal beam (22), into which pocket a hinge device (25) of the tailgate (10) at least partially projects.

12. Body structure according to Claim 11, **characterized in that** the pocket (68) is delimited laterally by the inner side part (32) and by the section (65).

13. Body structure according to Claim 1, **characterized in that** the length of the roof frame projection (37) measured in the direction of the transversely running roof frame (23) is greater than the length of the hinge reinforcement (51).

14. Body structure according to Claim 1, **characterized in that** the hinge reinforcement (51) is additionally fastened to the roof longitudinal beam projection (31) of the inner side part (32).

15. Body structure according to Claim 1, **characterized in that** the roof frame projection (37) - as viewed in cross section - has at least two limbs (54, 55) which run at an angle to one another, and **in that** the hinge reinforcement (51) is fastened to both limbs (54, 55).

## Revendications

1. Structure arrière de carrosserie d'un véhicule automobile (1) comprenant une portion de carrosserie (9) pour un hayon arrière (10) monté sur la structure de carrosserie, laquelle structure de carrosserie présente un noeud de toit (19, 20), dans lequel se rejoignent un longeron de toit (22) latéral, un cadre de toit s'étendant transversalement (23) avec une liaison par charnière (27) pour le hayon arrière (10) et une colonne arrière (24), le longeron de toit (22), le cadre de toit (23) et la colonne (24) présentant à chaque fois au moins une paroi extérieure et une paroi intérieure en construction en coque de tôle, lequel noeud de toit (19, 20) présente en outre une partie latérale intérieure (32) avec un prolongement de longeron de toit (31), un prolongement de cadre de toit (37) et un prolongement de colonne (33), lequel prolongement de longeron de toit (31) et lequel prolongement de colonne (33) forment la paroi intérieure respective, un renforcement de charnière (51) de la liaison par charnière (27) étant fixé sur le prolongement de cadre de toit (37), **caractérisée en ce que** le prolongement de cadre de toit (37) de la partie latérale intérieure (32) forme une portion (38) de la paroi extérieure du cadre de toit (23) s'étendant transversalement, **en ce que** le renforcement de charnière (51) est fixé sur une surface intérieure (50) du prolongement de cadre de toit (37) et **en ce qu'**une partie intérieure de cadre de toit (40) forme la paroi intérieure du cadre de toit (23).

2. Structure de carrosserie selon la revendication 1, **caractérisée en ce que** la partie intérieure de cadre de toit (40) s'étend jusqu'au prolongement de longeron de toit (31) et est fixée à celui-ci.

3. Structure de carrosserie selon la revendication 1, **caractérisée en ce que** la partie intérieure de cadre de toit (40) présente une partie centrale (41) et une partie de fermeture latérale (42).

4. Structure de carrosserie selon la revendication 2, **caractérisée en ce que** la partie intérieure de cadre de toit (40) présente une partie centrale (41) et une partie de fermeture latérale (42).

5. Structure de carrosserie selon la revendication 3, **caractérisée en ce que** la partie de fermeture (42) s'étend jusqu'au prolongement de longeron de toit (31) et est fixée à celui-ci.

6. Structure de carrosserie selon la revendication 1, **caractérisée en ce que** le longeron de toit (22) est pourvu d'une partie de renforcement intérieure (70) située entre la paroi extérieure et la paroi intérieure.

7. Structure de carrosserie selon la revendication 1, **caractérisée en ce que** la colonne arrière (24) limite au moins en partie la portion de carrosserie (9) par un canal d'étanchéité (60).

8. Structure de carrosserie selon la revendication 7, **caractérisée en ce que** le canal d'étanchéité (60) présente un profilé ouvert en tant que partie de canal d'étanchéité (61), qui limite partiellement la portion de carrosserie (9) avec une bride biseautée (62) et qui pénètre avec une portion (65) dans le longeron de toit (22).

9. Structure de carrosserie selon la revendication 8, **caractérisée en ce que** la partie de canal d'étanchéité (61) et le prolongement de colonne (33) de la partie latérale intérieure (32) se situent au moins en partie l'une au-dessus de l'autre.

10. Structure de carrosserie selon la revendication 7, **caractérisée en ce que** la portion (65) pénétrant dans le longeron de toit (22) est connectée dans celui-ci à la partie de renforcement (70) et à la partie latérale intérieure (32).

11. Structure de carrosserie selon la revendication 1, **caractérisée en ce qu'**une cavité (68) est formée dans le longeron de toit (22), un dispositif de charnière (25) du hayon arrière (10) pénétrant au moins en partie dans cette cavité.

12. Structure de carrosserie selon la revendication 11, **caractérisée en ce que** la cavité (68) est limitée latéralement par la partie latérale intérieure (32) et la portion (65).

13. Structure de carrosserie selon la revendication 1, **caractérisée en ce que** la longueur du prolongement de cadre de toit (37) mesurée dans la direction du cadre de toit (23) s'étendant transversalement est supérieure à la longueur du renforcement de charnière (51).

14. Structure de carrosserie selon la revendication 1, **caractérisée en ce que** le renforcement de charnière (51) est fixé en outre au prolongement de longeron de toit (31) de la partie latérale intérieure (32).

15. Structure de carrosserie selon la revendication 1, **caractérisée en ce que** le prolongement de cadre de toit (37), vu en section transversale, présente au moins deux branches (54, 55) s'étendant suivant un certain angle l'une par rapport à l'autre, et **en ce que** le renforcement de charnière (51) est fixé aux deux branches (54, 55).
